# EUROPÄISCHE PATENTANMELDUNG

(11) **EP 0 659 692 A1**
(43) Veröffentlichungstag der Anmeldung: **28.06.1995**
(21) Anmeldenummer: 94115311.6
(22) Anmeldetag: 29.09.1994
(51) Int. Cl.: C02F 1/461, C25B 1/00, C02F 1/46

(54) **Verfahren zur elektrochemischen Reduktion von Nitrat**

(30) Priorität: 24.12.1993 DE 4344613
(71) Anmelder: Hahnewald GmbH, 01189 Dresden (DE)
(72) Erfinder: Rahner, Dietmar, Dr., D-01217 Dresden (DE); Otter, Katrin, Dipl.-Chem., D-01189 Dresden (DE); Isberner, Katrin, Dipl.-Chem., D-01159 Dresden (DE); Fenk, Bernd, Dipl.-Chem., D-01324 Dresden (DE); Hahnewald, Dieter, Dipl.-Ing., D-01259 Dresden (DE); Fischwasser, Klaus, Prof. Dr., D-01326 Dresden (DE); Haftendorn, Manfred, Dr., D-06122 Halle (DE); Seibt, Frieder, Dipl.-Ing., D-01309 Dresden (DE); Reichert, Johannes K., Prof. Dr., D-52159 Roetgen (DE)
(74) Vertreter: Uhlemann, Henry, Dipl.-Chem.

(57) **Zusammenfassung**

Die Erfindung betrifft ein Verfahren zur katalytisch-elektrochemischen Reduktion von Nitrat, vornehmlich zu elementarem Stickstoff in wäßrigen Lösungen an einer Katode.
Ziel der Erfindung ist es, durch diese Reduktionen des Nitrates auch konzentrierte salzhaltige wäßrige Lösungen zu denitrifizieren.
Dabei wird die wäßrige Lösung in den Katodenraum einer Elektrolysezelle, in der Katodenraum und Anodenraum durch eine Kationenaustauschermembran voneinander getrennt sind, eingebracht und in derselben einer Spannung ausgesetzt.

## Beschreibung

Die Erfindung betrifft ein Verfahren zur katalytisch-elektrochemischen Reduktion von Nitrat, vornehmlich zu elementarem Stickstoff in wäßrigen Lösungen an einer Katode

Wäßrige nitrathaltige Lösungen sind z.B. Regenerate aus Ionenaustauschern, die zur Nitrat-Eliminierung aus Trinkwasser eingesetzt werden, oder Abwässer aus der Industrie.

Die übliche bisher bekannte enzymkatalytische biologische Denitrifikation arbeitet häufig nicht zuverlässig, insbesondere dann nicht, wenn hohe Salzkonzentrationen vorliegen. So war es bisher beispielsweise nicht möglich, nitrathaltige Regenerate aus Ionenaustauschern so aufzubereiten, daß eine Kreislaufführung des Regeneriermittels hätte erfolgen können.

Ziel der Erfindung ist es, durch katalytisch-katodische Reduktion des Nitrates auch konzentrierte salzhaltige wäßrige Lösungen zu denitrifizieren.

Der Erfindung liegt die Aufgabe zugrunde, Voraussetzungen zu schaffen, daß durch Kombination der Elektrolyse mit Aufkonzentrierungsverfahren wie Ionenaustausch, Umkehrosmose, Elektrodialyse umweltverträgliche Verfahrenskombinationen zur Nitrat-Eliminierung aus Wässern und wäßrigen Lösungen möglich werden.

Gelöst wird diese Aufgabe durch die Lehre der Patentansprüche und zwar dadurch, daß die nitrathaltige wäßrige Lösung in den Katodenraum einer Elektrolysezelle eingebracht und eine entsprechende elektrische Spannung angelegt wird.

In der Elektrolysezelle sind Katoden- und Anodenraum durch eine Kationenaustauschermembran voneinander getrennt, die Katode ist mit einem Katalysator dotiert und im Anodenraum befindet sich eine andere wäßrige Lösung, z.B. Schwefelsäure, die im Kreislauf geführt wird.
An der Katode erfolgt die chemische Reduktion des Nitrates gemäß Gleichung (1), wobei je Mol Nitrat-Umsatz 6 Mol Protonen verbraucht werden. 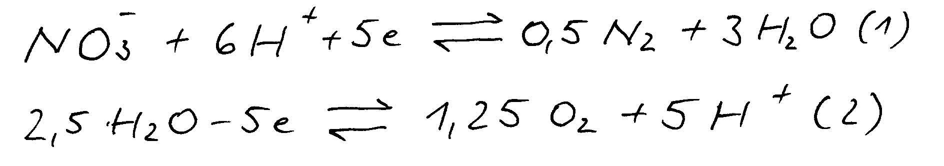
An der Anode erfolgt gemäß Gleichung (2) eine Wasserzersetzung unter Bildung von 5 Mol Protonen, die aus dem Anodenraum durch die Kationenaustauschermembran in den Katodenraum wandern. Mit der Wasserzersetzung ist eine Aufkonzentrierung der Lösung im Anodenraum verbunden, so daß Wasser ergänzt werden muß.
Das verbleibende Protonen-Defizit von mindestens 1 Mol Protonen je Mol Nitrat im Katodenraum muß durch Zugabe von Säure, z.B. Salzsäure, in die zu behandelnde nitrathaltige Lösung ausgeglichen werden.

Aufgrund der Tatsache daß die elektrochemische Nitrat-Reduktion kinetisch stark gehemmt ist und Nebenreaktionen (z.B. Ammonium-Bildung) den Gesamtprozeß stören können, spielt neben der Zusammensetzung der nitrathaltigen Lösung und dem Potentialbereich insbesondere der Verbund Katode/Katalysator eine entscheidende Rolle, wobei die Elektrode als Träger für den Katalysator dient. Erfindungsgemäß ermöglicht eine mit verschiedenen Schwermetallen, z.B. Kupfer-Palladium, dotierte Partikelelektrode, z.B. Aktivkohle-Partikel, die katodisch-katalytische Reduktion des Nitrates gemäß Gleichung (1).
Durch Variation des Trägermaterials sowie der Schwermetallgehalte im Trägermaterial kann die Kinetik der Nitrat-Reduktion und damit die Entstehung von Nebenprodukten gezielt beeinflußt werden.

Im folgenden wird ein Beispiel zur Durchführung des Verfahrens gemäß Erfindung näher beschrieben.

In einer Elektrolysezelle, in der Katoden- und Anodenraum durch eine Kationenaustauschermembran getrennt sind, werden in den Katodenraum eine Nitrat-Lösung (etwa 10 g/l Nitrat) und in den Anodenraum ein ca. 5%ige Schwefelsäure gegeben.
Als Katode dient eine mit Kupfer-Palladium dotierte Aktivkohle-Partikel-Elektrode (Kupfer-Anteil < 10%; Palladium-Anteil <1%).
Bei einem Potential von 1000 bis 1400mV werden ca. 90% des Nitrates zu Stickstoff umgesetzt. Der pH-Wert wird durch Zugabe von Salzsäure in den Katodenraum konstant gehalten. Eine vollständige Reduktion des Nitrates ist nicht erforderlich, da die im Katodenraum behandelte Lösung als Regeniermittel für einen mit Nitrat beladenen Anionenaustauscher dient.

## Patentansprüche

1. Verfahren zur katalytisch-elektrochemischen Reduktion von Nitrat, vornehmlich zu elementarem Stickstoff in wäßrigen Lösungen, dadurch gekennzeichnet, daß die wäßrige Lösung in den Katodenraum einer Elektrolysezelle, in der Katodenraum und Anodenraum durch eine Kationenaustauschermembran voneinander getrennt sind, eingebracht und in derselben einer Spannung ausgesetzt wird.

2. Verfahren nach Anspruch 1, dadurch gekennzeichnet, daß die Katode aus Trägermaterialien, die mit Katalysatoren dotiert sind, besteht.

3. Verfahren nach Anspruch 1 oder 2, dadurch gekennzeichnet, daß Schwermetallmischkatalysatoren auf Trägermaterialien verwendet werden.

4. Verfahren nach einem der Ansprüche 1 bis 3, dadurch gekennzeichnet, daß die im Katodenraum der Elektrolysezelle zu behandelnde nitrathaltige Lösung nach der Behandlung als Regeneriermittel für Ionenaustauscher eingesetzt wird.
